# EUROPÄISCHE PATENTSCHRIFT

(11) **EP 3 097 317 B1**
(45) Veröffentlichungstag und Bekanntmachung des Hinweises auf die Patenterteilung: **31.07.2019**
(21) Anmeldenummer: 15741828.6
(22) Anmeldetag: 25.03.2015
(51) Int. Cl.: F16D 1/033

(54) **KUPPLUNGSVORRICHTUNG ZUR ANBINDUNG EINER SCHALTKUPPLUNG AN EINEN TURBINENSTRANG**
COUPLING DEVICE FOR CONNECTING A COUPLING TO A TURBINE LINE
DISPOSITIF D'ACCOUPLEMENT DESTINÉ À RELIER UN EMBRAYAGE À UN ENSEMBLE DE TURBINE

(30) Priorität: 15.04.2014 EP 14164721
(43) Veröffentlichungstag der Anmeldung: 30.11.2016
(73) Patentinhaber: Siemens Aktiengesellschaft, 80333 München (DE)
(72) Erfinder: LACOMBE, Bernd, 46348 Raesfeld (DE); MYSCHI, Oliver, 47137 Duisburg (DE); PIEPER, Daniel, 45529 Hattingen (DE)
(86) Internationale Anmeldenummer: PCT/EP2015/056384
(87) Internationale Veröffentlichungsnummer: WO 2015/158511

(56) Entgegenhaltungen:
- EP-A2- 1 288 514
- WO-A1-88/02074
- WO-A1-2009/158401
- US-A- 4 743 138

## Beschreibung

Die vorliegende Erfindung betrifft eine Kupplungsvorrichtung zur Anbindung einer Schaltkupplung an einen Turbinenstrang, einen Turbinenstrang mit einer Schaltkupplung sowie ein Verfahren zur Anbindung einer Schaltkupplung an einen Generator und an eine Turbine.

Zur Ankuppelung einer Dampfturbine an einen Generators mit einer Gasturbine in einer Einwellenanlage wird eine Schaltkupplung verwendet, mit der die Dampfturbine direkt oder indirekt mittels einer Zwischenwelle, während des Betriebs an den Generator mit der verbundenen Gasturbine angekuppelt werden kann. Eine solche Schaltkupplung ist aus dem Stand der Technik bekannt. Bei Schaltkupplungen dieser Art werden die Kupplungsflansche von Generator bzw. Turbine getrennt von den Flanschen der Schaltkupplung bearbeitet, da die Schaltkupplungen austauschbar sein sollen und beim Bearbeitungsvorgang, beispielsweise bei einem gemeinsamen Honen, sonst Späne in die Schaltkupplung gelangen. Aus diesem Grund werden bei den bekannten Schaltkupplungen massive Kupplungsbolzen mit einem relativ großen Spiel eingebaut, um die Montierbarkeit bei allen möglichen Toleranzen der Lage und Größe der Kupplungsbohrungen gewährleisten zu können. Die Zentrierung dieser Schaltkupplungen erfolgt über einen sogenannten Rezess, welcher mit Übergangspassung in die Kupplungsverbindung eingesetzt wird, während die Kupplungsbolzen keinen Einfluss auf die Zentrierung haben. Dadurch weist die Kupplungsverbindung zur Schaltkupplung ein gewisses Spiel auf und der Rundlauf des Turbinenstrangs ist nicht reproduzierbar und negativ beeinflusst.

Da die innenliegende Seite des Kupplungsflansches der Schaltkupplung in der Regel nicht zugänglich ist, können heute keine durchgehenden Kupplungsbolzen verwendet werden, die eine axiale Verspannung mit einer beidseitigen Fixierung ermöglichen würde.

Kupplungsvorrichtungen sind in den Dokumenten WO 88/02074, US 4 743 138, WO 2009/158401 und EP 1 288 514 offenbart.

Aufgabe der Erfindung ist es, eine Kupplungsvorrichtung für die Anbindung an eine Schaltkupplung bereitzustellen, bei der trotz einseitiger Zugänglichkeit der Kupplungsflansche diese sicher und reproduzierbar zueinander fixiert werden, wobei die angekuppelte Schaltkupplung austauschbar bleibt und es keiner aufwendigen, gemeinsamen Bearbeitung bedarf.

Die erfindungsgemäße Kupplungsvorrichtung zur Anbindung der Schaltkupplung mit den Merkmalen des Anspruchs 1 bietet gegenüber den aus dem Stand der Technik bekannten Kupplungselementen den Vorteil, dass die Zentrierung der Kupplungsflansche über mindestens ein Verbindungselement erfolgt, welcher in die Bohrungen im Kupplungsflansch und in die Bohrung im Kupplungsflansch der Schaltkupplung eingesetzt ist. Dadurch kann eine reproduzierbare Fixierung und damit eine höhere Rundlaufgenauigkeit und eine bessere Auswuchtgüte erreicht werden.

Durch die in den abhängigen Ansprüchen angeführten Maßnahmen sind vorteilhafte Weiterbildungen und Verbesserungen der im unabhängigen Anspruch angegebenen Kupplungsvorrichtung möglich.

Eine vorteilhafte Weiterbildung besteht darin, dass an dem turbinen- oder generatorseitigen Kupplungsflansch ein axialer Anschlag zur Positionierung des Verbindungselements ausgebildet ist. Dadurch lässt sich die Position des Bolzens, insbesondere bei der Montage, gegenüber den beiden Kupplungsflanschen auf einfache und reproduzierbare Art sicherstellen, ohne dass es einer axialen Verschraubung bedarf. Besonders vorteilhaft ist dabei, wenn der axiale Anschlag in eine Bohrung im Kupplungsflansch, beispielsweise als gestufte Bohrung, integriert ist, so dass keine zusätzliche Bearbeitung eines der beiden Kupplungsflansche notwendig ist.

Eine weitere vorteilhafte Weiterbildung besteht darin, dass das Verbindungselement als Spreizbolzen mit einem internen Spreizmechanismus ausgeführt ist. Durch eine Ausgestaltung als Spreizbolzen kann das Verbindungselement sowohl für die Zentrierung der beiden Kupplungsflansche zueinander, als auch für eine spielfreie und formschlüssige Verbindung zur Drehmomentübertragung genutzt werden. Um einen optimalen Formschluss zwischen Spreizbolzen und Kupplungsflansch zu realisieren, ist es vorteilhaft, dass der Spreizbolzen eine Hülse mit einer konischen Innenfläche und einen Bolzen mit einer konischen Außenfläche aufweist. Konische Flächen an Innen und Außenfläche sind eine einfache und kostengünstige Lösung, um einen Spreizbolzen zu realisieren.

Dabei ist besonders vorteilhaft, wenn der Spreizbolzen axiale Schlitze aufweist, wodurch die Spreizfunktion durch Anziehen einer mit dem Spreizbolzen in Wirkzusammenhang stehenden Schraubverbindung einfach realisiert werden kann.

Eine weitere vorteilhafte Weiterbildung besteht darin, dass die Kupplungsflansche mehrere, über den Umfang verteilte Bohrungen aufweisen, welche gleichmäßig über den Umfang verteilt sind, wobei jede Bohrung einen Spreizbolzen aufnimmt. Durch mehrere, bevorzugt gleichmäßig über den Umfang verteilte, Spreizbolzen in den Bohrungen der Kupplungsflansche können höhere Kräfte und Drehmomente übertragen werden. Zusätzlich können fertigungsbedingte Abweichungen zwischen den einzelnen Bohrungen über die Spreizbolzen ein Stück weit ausgeglichen werden, indem die Spreizbolzen unterschiedlich stark oder in einer unterschiedlichen Reihenfolge, die heißt nicht im Uhrzeigersinn oder gegen den Uhrzeigersinn, sondern alternierend angezogen werden. Dies erspart eine teure, gemeinsame Bearbeitung, beispielsweise ein gemeinsames Honen der Bohrungen. Außerdem bleibt die Schaltkupplung somit einfach austauschbar, was die Kosten in der Revision und in der Instandhaltung reduziert.

Eine bevorzugte Anwendung für ein erfindungsgemäßes Kupplungselement zur Anbindung einer Schaltkupplung liegt in der beschriebenen Schaltkupplung von einer Dampfturbine mit einem Generator und einer Gasturbine in einem Kraftwerk.

Im Folgenden wird ein Ausführungsbeispiel der erfindungsgemäßen Kupplungsvorrichtung zur Anbindung der Schaltkupplung anhand der beigefügten Zeichnungen erläutert. Gleiche Bauteile oder Bauteile mit gleicher Funktion sind dabei mit gleichen Bezugszeichen gekennzeichnet.
Fig. 1 zeigt einen Turbinenstrang mit einer Schaltkupplung
Fig. 2 zeigt schematisch eine Schaltkupplung, welche über eine erfindungsgemäße Kupplungsvorrichtung mit den beidseitig angeordneten Kupplungsflanschen von Dampfturbinenwelle und Generatorwelle verbunden ist.
Fig. 3 zeigt ein Ausführungsbeispiel einer erfindungsgemäßen Kupplungsvorrichtung zur Anbindung einer Schaltkupplung an einen Turbinenstrang.

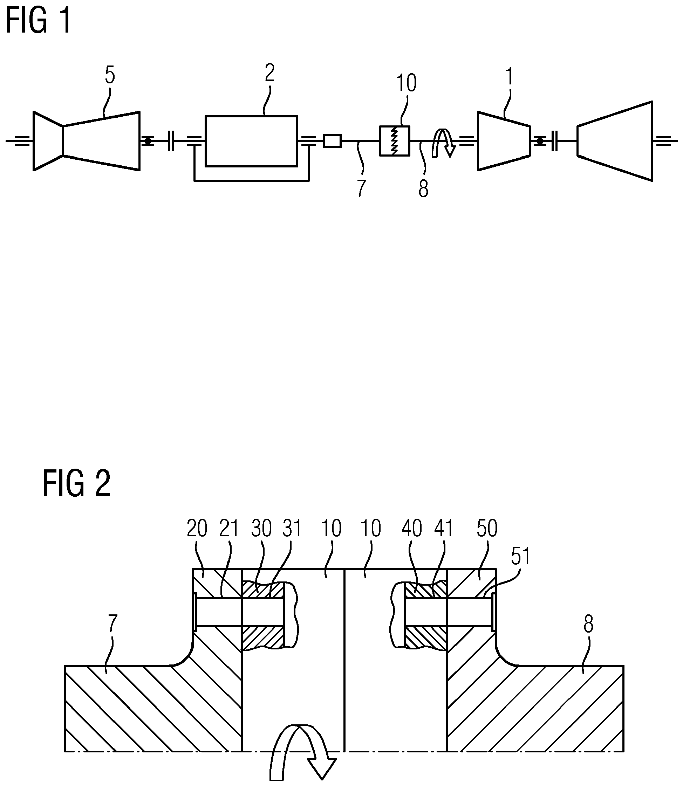

In Fig. 1 ist ein Turbinenstrang dargestellt. Der Turbinenstrang umfasst eine Dampfturbine 1, eine Gasturbine 5 und einen Generator 2, wobei der Generator 2 über eine Schaltkupplung 10 ebenfalls an die Dampfturbine 1 angekuppelt ist. Zur Ankupplung der Schaltturbine sind an einer Generatorwelle 7, welche die Schaltkupplung 10 mit dem Generator 2 verbindet, sowie an einer Turbinenwelle 8, welche die Schaltkupplung 10 mit einer Turbine 1,5, insbesondere der Dampfturbine 5 verbindet, Kupplungsflansche 20, 50 ausgebildet.

Fig. 2 zeigt eine erfindungsgemäße Kupplungsvorrichtung zur Anbindung eines Generators 2, bzw. einer Generatorwelle 7. Die Kupplungsvorrichtung umfasst einen ersten Kupplungsflansch 20, welcher an der Generatorwelle 7 ausgebildet ist und einen zweiten Kupplungsflansch 50, welcher an der Turbinenwelle 8 ausgebildet ist. Die beiden Kupplungsflansche 20,50 weisen jeweils Durchgangsbohrungen 21,51 auf. Die Schaltkupplung 10 weist an beiden Enden jeweils einen internen Kupplungsflansch 30,40 auf. Die internen Kupplungsflansche 30,40 der Schaltkupplung 10 weisen jeweils Sacklockbohrungen 31,41 auf. Die Schaltkupplung 10 ist mit den Wellen 7,8 verbindbar, indem auf der einen Seite der Kupplungsflansch 20 der Generatorwelle 7 über Verbindungselemente 12, insbesondere mit Spreizbolzen 13, mit dem ersten internen Kupplungsflansch 30 der Schaltkupplung 10 verbunden wird, und indem die Turbinenwelle 8 über den Kupplungsflansch 50 mit Verbindungselementen 12, insbesondere mit Spreizbolzen 13, mit dem zweiten internen Kupplungsflansch 40 der Schaltkupplung 10 verbunden wird.

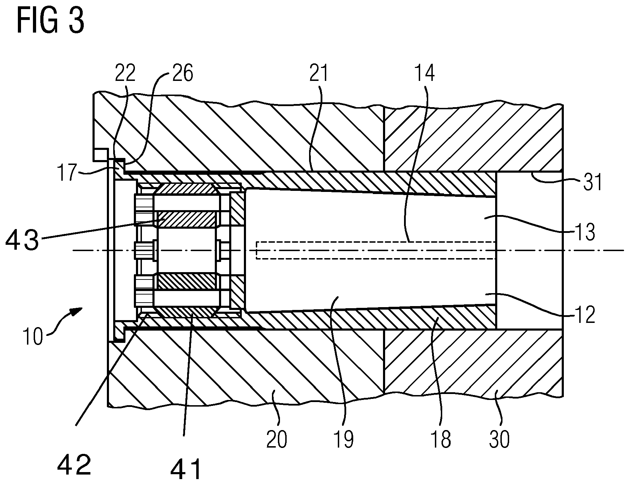

Fig. 3 zeigt eine Anbindung des Generators 2 über die Generatorwelle 7. An der Generatorwelle 7 ist der Kupplungsflansch 20 ausgebildet. Der Kupplungsflansch 20 ist mit dem internen Kupplungsflansch 30 an der Schaltkupplung 10 verbunden, wobei der erste Kupplungsflansch 20 eine Bohrung 21 aufweist, und der zweite Kupplungsflansch 30 eine Bohrung 31 aufweist. Die Bohrung 21 des ersten Kupplungsflansches 20 weist einen Absatz 22 auf, welcher als ein axialer Anschlag 26 für einen in die Bohrungen 21,31 eingesetztes Verbindungselement 12 dient. Das Verbindungselement 12 weist an seinem dem ersten Kupplungsflansch 20 zugewandten Ende einen Kragen 17 auf, welcher sich an dem Absatz 22 abstützt. Das Verbindungselement 12 ist als Spreizbolzen 13 ausgeführt. Dabei ist der Spreizbolzen 13 so dimensioniert, dass der Spreizbolzen 13 im entlasteten Zustand mit Spielpassung in die Bohrungen 21,31 an den Kupplungsflanschen 20,30 eingesetzt wird. Durch den Anschlag 26 und den Kragen 17 am Spreizbolzen 13 wird die axiale Position des Spreizbolzens 13 definiert, so dass eine sichere Positionierung des Spreizbolzens 13 zu den beiden Kupplungsflanschen 20,30 erreicht wird. Der Spreizbolzen 13 weist eine geschlitzte Hülse 18 auf, wobei ein Schlitz 14 in axialer Richtung der Hülse 18 des Spreizbolzens 13 ausgebildet ist. Durch Verspannen der Hülse 18 mit dem internen Konus 19 des Spreizbolzens 13 wird der Außendurchmesser des Spreizbolzens 13 vergrößert, so dass der Spreizbolzen 13 den ersten Kupplungsflansch 20 und den zweiten Kupplungsflansch 30 zueinander zentriert. Dabei entsteht eine formschlüssige und spielfreie Verbindung zwischen dem Spreizbolzen 13 und den beiden Kupplungsflanschen 20,30, so dass ein Drehmoment über die Schaltkupplung 10 übertragen und die Positionierung der Kupplungsflansche 20,30 zueinander reproduzierbar sichergestellt werden kann.

Um einen einfachen Austausch der Spreizbolzen 13 zu ermöglichen, reduziert sich der Außendurchmesser 13 beim Lösen des Konus 19 aus der Hülse 18 des Spreizbolzens 13 wieder auf das ursprüngliche Maß und der Spreizbolzen 13 kann somit leicht aus den Bohrungen 21,31 in den Kupplungsflanschen 20,30 gezogen werden.

Um größere Drehmomente zu übertragen, sind mehrere, vorzugsweise 4 bis 20, Bohrungen 21,31 über den Umfang der Kupplungsflansche 20,30 gleichmäßig verteilt. Dabei können unterschiedliche Toleranzlagen der Bohrungen 21,31 und der Spreizbolzen 13 durch unterschiedlich stark und in alternierenden Reihenfolge angezogene Spreizbolzen 13 ausgeglichen werden. Unter alternierender Reihenfolge ist in diesem Zusammenhang zu verstehen, dass die Spreizbolzen nicht der Reihe nach im Uhrzeigersinn oder gegen den Uhrzeigersinn angezogen werden, sondern zunächst ein erster Spreizbolzen 13, danach ein um ca. 180° versetzter zweiter Spreizbolzen 13 und dann ein weiterer Spreizbolzen 13, der nicht in unmittelbarer Nähe des ersten oder zweiten Spreizbolzens 13 angeordnet ist. Dabei ist es vorteilhaft, wenn die Spreizbolzen 13 zunächst locker eingesetzt werden und dann jeweils gegenüberliegende Spreizbolzen 13 angezogen werden, um eine möglichst gute und reproduzierbare Zentrierung der Kupplungsflansche 20,30 zueinander zu erreichen.

Wie in Figur 3 zu sehen weist die Kupplungsvorrichtung eine Verschubeinrichtung 40 zum axialen Verschieben des Bolzens 19 auf. Dabei weist die Vorschubeinrichtung ein stirnseitig angeordnetes Gewindeelement 41 auf, das ein Außengewinde aufweist. Dieses Außengewinde 42 greift in ein Innengewinde 34 in der Hülse ein und ist dabei derart ausgebildet, dass ein Drehen des Gewindeelements 41 zu einer axialen Verschiebung des Bolzens 19 führt. Der Bolzen 19 weist hierbei eine Zentralachse 44 auf, die in eine Bohrung 45 im Gewindeelement 41 eingreift.

Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Kupplungsvorrichtung zur Anbindung einer Schaltkupplung (10) an einen Turbinenstrang, umfassend einen ersten Kupplungsflansch (20) und einen zweiten Kupplungsflansch (30), wobei der erste Kupplungsflansch (20) und der zweite Kupplungsflansch (30) je mindestens eine Bohrung (21,31) zur Aufnahme eines Verbindungselements (12) aufweisen,
wobei
der erste Kupplungsflansch (20) und der zweite Kupplungsflansch (30) über mindestens ein Verbindungselement (12) zueinander zentriert sind, welcher in die Bohrungen (21,31) im ersten und im zweiten Kupplungsflansch (20,30) eingesetzt ist,
**dadurch gekennzeichnet, dass**
die Bohrung (31) im zweiten Kupplungsflansch als Sacklochbohrung ausgeführt ist, wobei das Verbindungselement (12) als Spreizbolzen (13) ausgeführt ist, der Spreizbolzen (13) eine Hülse (18) mit einer konischen Innenfläche und einem Bolzen (19) mit einer konischen Außenfläche aufweist; mit einer Verschubeinrichtung (40) zum axialen Verschieben des Bolzens (19), wobei die Verschubeinrichtung (40) ein stirnseitig angeordnetes Gewindeelement (41) mit einem Außengewinde (42) aufweist, das in ein Innengewinde (43) in der Hülse (18) eingreift und derart ausgebildet ist, dass ein Drehen des Gewindelements (41) zu einer axialen Verschiebung des Bolzens (19) führt.

2. Kupplungsvorrichtung zur Anbindung einer Schaltkupplung (10) nach Anspruch 1,
**dadurch gekennzeichnet, dass**
an dem ersten Kupplungsflansch (20) oder an dem zweiten Kupplungsflansch (30), insbesondere in den Bohrungen (21,31), ein axialer Anschlag (26) zur Positionierung des Verbindungselements (12) ausgebildet ist.

3. Kupplungsvorrichtung zur Anbindung einer Schaltkupplung (10) nach Anspruch 1 oder 2,
**dadurch gekennzeichnet, dass**
das Verbindungselement (12) als Spreizbolzen (13) ausgeführt ist.

4. Kupplungsvorrichtung zur Anbindung einer Schaltkupplung (10) nach Anspruch 3,
**dadurch gekennzeichnet, dass**
der Spreizbolzen (13) eine Hülse (18) mit einer konischen Innenfläche und einen Bolzen (19) mit einer konischen Außenfläche aufweist.

5. Kupplungsvorrichtung nach Anspruch 4,
mit einer Verschubeinrichtung (40) zum axialen Verschieben des Bolzens (19).

6. Kupplungsvorrichtung nach Anspruch 5,
wobei die Verschubeinrichtung (40) ein stirnseitig angeordnetes Gewindeelement (41) mit einem Außengewinde (42) aufweist, das in ein Innengewinde (43) in der Hülse (18) eingreift und derart ausgebildet ist, dass ein Drehen des Gewindelementes (41) zu einer axialen Verschiebung des Bolzens (19) führt.

7. Kupplungsvorrichtung nach Anspruch 6,
wobei der Bolzen (19) eine Zentralachse (44) aufweist, die in eine Bohrung (45) im Gewindeelement (41) eingreift.

8. Kupplungsvorrichtung zur Anbindung einer Schaltkupplung (10) nach einem der Ansprüche 4 bis 7,
**dadurch gekennzeichnet, dass**
die Hülse (18) des Spreizbolzens (13) einen oder mehrere Schlitze (14) aufweist.

9. Kupplungsvorrichtung zur Anbindung einer Schaltkupplung (10) nach einem der Ansprüche 4 bis 8,
**dadurch gekennzeichnet, dass**
die Schlitze (14) in axialer Richtung der Hülse (18) ausgebildet sind.

10. Kupplungsvorrichtung zur Anbindung einer Schaltkupplung (10) nach einem der Ansprüche 1 bis 9,
**dadurch gekennzeichnet, dass**
die Kupplungsflansche (20,30) mehrere, bevorzugt 4 bis 20, Bohrungen (21,31) aufweisen, welche gleichmäßig über den Umfang der Kupplungsflansche (20,30) verteilt sind.

11. Kupplungsvorrichtung zur Anbindung einer Schaltkupplung (10) nach einem der Ansprüche 1 bis 10,
**dadurch gekennzeichnet, dass**
die Bohrungen (21,31) getrennt voneinander bearbeitet sind.

12. Turbinenstrang mit einer Turbine (1) und einem Generator (2), wobei der Generator (2) über eine Schaltkupplung (10) zumindest mittelbar an die Turbine (1) ankuppelbar ist,
**dadurch gekennzeichnet, dass**
die Ankuppelung über eine Schaltkupplung (10) erfolgt, wobei die Schaltkupplung (10) mit einer Kupplungsvorrichtung gemäß einem der Ansprüche 1 bis 11 mit einer Welle erfolgt.

13. Verfahren zur Ankupplung eines Generators (2) an eine Turbine (1), wobei der Generator (2) über eine Schaltkupplung (10) mit der Turbine (1) verbunden wird, indem ein erster, generatorseitiger Kupplungsflansch (20) und ein zweiter, turbinenseitiger Kupplungsflansch (50) jeweils mit einem internen Kupplungsflanschen (30,40) der Schaltkupplung (10) verbunden sind und dabei je mindestens eine Bohrung (21,31) zur Aufnahme eines Verbindungselements (12) aufweisen, wobei der erste, generatorseitige Kupplungsflansch (20) und der zweite, turbinenseitige Kupplungsflansch (50) über jeweils mindestens einen Verbindungselement (12) zu den internen Kupplungsflanschen (30,40) der Schaltkupplung (10) zentriert werden, welche in den Bohrungen (21,31,41,51) in den Kupplungsflanschen (20,30,40,50) positioniert werden, wobei die Bohrung (31) als Sacklochbohrung ausgeführt wird.

14. Verfahren nach Anspruch 13,
**dadurch gekennzeichnet, dass**
eine Momentenübertragung zwischen dem ersten, generatorseitigen Kupplungsflansch (20) und dem ersten Kupplungsflansch (30) der Schaltkupplung sowie zwischen und dem zweiten, turbinenseitigen Kupplungsflansch (50) und dem zweiten Kupplungsflansch (40) der Schaltkupplung (10) per spielfreiem Formschluss erfolgt, indem mindestens ein Verbindungselement (12) als Spreizbolzen (13) ausgebildet ist, wobei der Spreizbolzen (13) derart in den Bohrungen (21,31,41,51) der Kupplungsflansche (20,30,40,51) verspannt wird, dass ein spielfreier Formschluss zwischen Spreizbolzen (13) und jeweils zwei Kupplungsflanschen (20,30,40,50) realisiert wird,
wobei mit einer Verschiebevorrichtung (40) ein axiales Verschieben des Bolzens (19) erfolgt.

## Claims

1. Coupling device for connecting a clutch (10) to a turbine train, comprising a first coupling flange (20) and a second coupling flange (30), wherein the first coupling flange (20) and the second coupling flange (30) each have at least one bore (21, 31) for receiving a connecting element (12),
wherein
the first coupling flange (20) and the second coupling flange (30) are centered with respect to one another by means of at least one connecting element (12) which is inserted into the bores (21, 31) in the first and in the second coupling flange (20, 30),
**characterized in that**
the bore (31) in the second coupling flange is embodied as a blind bore, wherein the connecting element (12) is embodied as an expansion bolt (13), the expansion bolt (13) has a sleeve (18) with a conical internal face and a bolt (19) with a conical external face; having a displacement device (40) for axial displacement of the bolt (19), wherein the displacement device (40) has a thread element (41), arranged on the end face side, with an external thread (42) that engages in an internal thread (43) in the sleeve (18) and is designed such that rotation of the thread element (41) produces axial displacement of the bolt (19).

2. Coupling device for connecting a clutch (10) according to Claim 1,
**characterized in that**
an axial stop (26) for positioning the connecting element (12) is formed on the first coupling flange (20) or on the second coupling flange (30), in particular in the bores (21, 31).

3. Coupling device for connecting a clutch (10) according to Claim 1 or 2,
**characterized in that**
the connecting element (12) is embodied as an expansion bolt (13).

4. Coupling device for connecting a clutch (10) according to Claim 3,
**characterized in that**
the expansion bolt (13) has a sleeve (18) with a conical internal face and a bolt (19) with a conical external face.

5. Coupling device according to Claim 4,
having a displacement device (40) for axial displacement of the bolt (19).

6. Coupling device according to Claim 5,
wherein the displacement device (40) has a thread element (41), arranged on the end face side, with an external thread (42) that engages in an internal thread (43) in the sleeve (18) and is designed such that rotation of the thread element (41) produces axial displacement of the bolt (19).

7. Coupling device according to Claim 6,
wherein the bolt (19) has a central axis (44) that engages in a bore (45) in the thread element (41).

8. Coupling device for connecting a clutch (10) according to one of Claims 4 to 7,
**characterized in that**
the sleeve (18) of the expansion bolt (13) has one or more slots (14).

9. Coupling device for connecting a clutch (10) according to one of Claims 4 to 8,
**characterized in that**
the slots (14) are formed in the axial direction of the sleeve (18).

10. Coupling device for connecting a clutch (10) according to one of Claims 1 to 9,
**characterized in that** the coupling flanges (20, 30) have multiple, preferably 4 to 20, bores (21, 31) which are distributed evenly over the circumference of the coupling flange (20, 30).

11. Coupling device for connecting a clutch (10) according to one of Claims 1 to 10,
**characterized in that**
the bores (21, 31) are machined separately from one another.

12. Turbine train having a turbine (1) and a generator (2), wherein the generator (2) can be coupled, at least indirectly, to the turbine (1) via a clutch (10),
**characterized in that**
coupling is effected via a clutch (10), wherein the clutch (10) having a coupling device according to one of Claims 1 to 11 is effected with a shaft.

13. Method for coupling a generator (2) to a turbine (1),
wherein the generator (2) is connected to the turbine (1) via a clutch (10), in that a first, generator-side coupling flange (20) and a second, turbine-side coupling flange (50) are each connected to an internal coupling flange (30, 40) of the clutch (10), and each have at least one bore (21, 31) for receiving a connecting element (12), wherein
the first, generator-site coupling flange (20) and the second, turbine-side coupling flange (50) are centered with respect to the internal coupling flanges (30, 40) of the clutch (10), in each case by means of at least one connecting element (12), that are positioned in the bores (21, 31, 41, 51) in the coupling flanges (20, 30, 40, 50), wherein the bore (31) is embodied as a blind bore.

14. Method according to Claim 13,
**characterized in that**
torque is transmitted between the first, generator-side coupling flange (20) and the first coupling flange (30) of the clutch, and between the second, turbine-side coupling flange (50) and the second coupling flange (40) of the clutch (10) by means of a play-free form fit, **in that** at least one connecting element (12) is designed as an expansion bolt (13), wherein the expansion bolt (13) is wedged within the bores (21, 31, 41, 51) of the coupling flanges (20, 30, 40, 50) so as to establish a play-free form fit between the expansion bolt (13) and, in each case, two coupling flanges (20, 30, 40, 50),
wherein axial displacement of the bolt (19) is effected by means of a displacement device (40).

## Revendications

1. Dispositif d'accouplement pour relier un accouplement (10) débrayable à une ligne de turbine, comprenant une première bride (20) d'accouplement et une deuxième bride (30) d'accouplement, la première bride (20) d'accouplement et la deuxième bride (30) d'accouplement ayant chacune au moins un trou (21, 31) de réception d'un élément (12) de liaison,
la première bride (20) d'accouplement et la deuxième bride (30) d'accouplement sont centrées l'une par rapport à l'autre par au moins un élément (12) de liaison, qui est inséré dans les trous (21, 31) de la première et de la deuxième bride (20, 30) d'accouplement,
**caractérisé en ce que**
le trou (31) de la deuxième bride d'accouplement est réalisé en trou borgne, l'élément (12) de liaison étant réalisé en mandrin (13) à expansion, le mandrin (13) à expansion ayant un manchon (18) à surface intérieure conique et un mandrin (19) à surface extérieure conique, comprenant un dispositif (40) de déplacement pour déplacer axialement le mandrin (19), le dispositif (40) de déplacement ayant un élément (41) fileté disposé du côté frontal et ayant un filet (42) extérieur, qui engrène dans un filet (43) intérieur du manchon (18) et qui est constitué de manière à ce qu'une rotation de l'élément (41) fileté donne un déplacement axial du mandrin (19).

2. Dispositif d'accouplement pour relier un accouplement (10) débrayable suivant la revendication 1,
**caractérisé en ce que**
sur la première bride (20) d'accouplement ou sur la deuxième bride (30) d'accouplement, est constituée, notamment dans les trous (21, 31), une butée (26) axiale de positionnement de l'élément (12) de liaison.

3. Dispositif d'accouplement pour relier un accouplement (10) débrayable suivant la revendication 1 ou 2,
**caractérisé en ce que**
l'élément (12) de liaison est réalisé sous la forme d'un mandrin (13) à expansion.

4. Dispositif d'accouplement pour relier un accouplement (10) débrayable suivant la revendication 3,
**caractérisé en ce que**
le mandrin (13) à expansion a un manchon (18) ayant une surface intérieure conique et un mandrin (19) ayant une surface extérieure conique.

5. Dispositif d'accouplement suivant la revendication 4, comprenant un dispositif (40) de déplacement pour déplacer axialement le mandrin (19).

6. Dispositif d'accouplement suivant la revendication 5,
dans lequel le dispositif (40) de déplacement a un élément (41) fileté disposé du côté frontal et ayant un filet (42) extérieur, qui engrène dans un filet (43) intérieur du manchon (18) et qui est constitué de manière à ce qu'une rotation de l'élément (41) fileté donne un déplacement axial du mandrin (19).

7. Dispositif d'accouplement suivant la revendication 6,
dans lequel le mandrin (19) a un axe (44) central, qui pénètre dans un trou (45) de l'élément (41) fileté.

8. Dispositif d'accouplement pour relier un accouplement (10) débrayable suivant l'une des revendications 4 à 7,
**caractérisé en ce que**
le manchon (18) du mandrin (13) à extension a une fente (14) ou plusieurs fentes (14).

9. Dispositif d'accouplement pour relier un accouplement (10) débrayable suivant l'une des revendications 4 à 8,
**caractérisé en ce que**
les fentes (14) sont constituées dans la direction axiale du manchon (18).

10. Dispositif d'accouplement pour relier un accouplement (10) débrayable suivant l'une des revendications 1 à 10,
**caractérisé en ce que**
les brides (20, 30) d'accouplement ont plusieurs, de préférence de 4 à 20, trous (21, 31), qui sont répartis uniformément sur le pourtour des brides (20, 30) d'accouplement.

11. Dispositif d'accouplement pour relier un accouplement (10) débrayable suivant l'une des revendications 1 à 10,
**caractérisé en ce que**
les trous (21, 31) sont usinés séparément les uns des autres.

12. Ligne de turbine, comprenant une turbine (1) et une génératrice (2), la génératrice (2) pouvant être accouplée au moins indirectement à la turbine (1) par un accouplement (10) débrayable,
**caractérisé en ce que**
l'accouplement s'effectue par un accouplement (10) débrayable, l'accouplement (10) débrayable s'effectuant par un dispositif d'accouplement suivant l'une des revendications 1 à 11.

13. Procédé d'accouplement d'une génératrice (2) à une turbine (1), la génératrice (2) étant reliée à la turbine (1) par un accouplement (10) débrayable, par le fait qu'une première bride (20) d'accouplement du côté de la génératrice et qu'une deuxième bride (50) d'accouplement du côté de la turbine sont reliées chacune par une bride (30, 40) d'accouplement interne de l'accouplement (10) débrayable et ont, à cet effet, chacune au moins un trou (21, 31) de réception d'un élément (12) de liaison,
dans lequel
on centre la première bride (20) d'accouplement du côté de la génératrice et la deuxième bride (5) d'accouplement du côté de la turbine, par, respectivement, au moins un élément (12) de liaison, par rapport aux brides (30, 40) internes d'accouplement de l'accouplement (10) débrayable que l'on positionne dans les trous (21, 31, 41, 51) des brides (20, 30, 40, 50) d'accouplement, le trou (31) étant réalisé en trou borgne.

14. Procédé suivant la revendication 13,
**caractérisé en ce qu'**
une transmission de couple a lieu entre la première bride (20) d'accouplement du côté de la génératrice et la première bride (30) d'accouplement de l'accouplement débrayable, ainsi qu'entre la deuxième bride (5) d'accouplement du côté de la turbine et la deuxième bride (40) d'accouplement de l'accouplement (10) débrayable, par complémentarité de forme sans jeu, par le fait qu'au moins un élément (12) de liaison est réalisé sous la forme d'un mandrin (13) à expansion, dans lequel on bloque le mandrin (13) à expansion dans les trous (21, 31, 41, 51) des brides (20, 30, 40, 51) d'accouplement, de manière à réaliser une complémentarité de forme sans jeu entre le mandrin (13) à expansion et, respectivement, deux brides (20, 30, 40, 50) d'accouplement,
dans lequel un déplacement axial du mandrin (19) est effectué par un dispositif (40) de déplacement.
